# EUROPÄISCHE PATENTSCHRIFT

(11) **EP 4 224 704 B1**
(45) Veröffentlichungstag und Bekanntmachung des Hinweises auf die Patenterteilung: **04.06.2025**
(21) Anmeldenummer: 23154878.5
(22) Anmeldetag: 03.02.2023
(51) Int. Cl.: H02P 25/22, H02P 21/06

(54) **ELEKTRONISCH KOMMUTIERTE ELEKTRISCHE MASCHINE MIT MEHREREN TEILMASCHINEN SOWIE VERFAHREN ZUM BETREIBEN EINER SOLCHEN ELEKTRISCHEN MASCHINE**
ELECTRONICALLY COMMUTATED ELECTRIC MACHINE HAVING A PLURALITY OF SUB-MACHINES AND METHOD FOR OPERATING SUCH AN ELECTRIC MACHINE
MACHINE ÉLECTRIQUE COMMUTÉE ÉLECTRONIQUEMENT COMPRENANT PLUSIEURS MACHINES PARTIELLES ET PROCÉDÉ DE FONCTIONNEMENT D'UNE TELLE MACHINE ÉLECTRIQUE

(30) Priorität: 03.02.2022 DE 102022201150
(43) Veröffentlichungstag der Anmeldung: 09.08.2023
(73) Patentinhaber: Volkswagen Aktiengesellschaft, 38440 Wolfsburg (DE)
(72) Erfinder: Schäfer, Johannes Maria, 39606 Iden OT Kannenberg (DE)

(56) Entgegenhaltungen:
- CN-B- 108 107 734
- DE-A1- 102019 122 434
- US-A1- 2018 105 201
- US-A1- 2019 308 664
- ZHOU QIXUN ET AL: "Crossed-feedback control of dual-redundancy permanent magnetic brushless dc servo system used in electro-hydrostatic actuator", ELECTRICAL MACHINES AND SYSTEMS, 2008. ICEMS 2008. INTERNATIONAL CONFERENCE ON, IEEE, PISCATAWAY, NJ, USA, 17 October 2008 (2008-10-17), pages 1237 - 1241, XP031415911, ISBN: 978-1-4244-3826-6
- KUANG XIAOLIN ET AL: "Research on a six-phase permanent magnet synchronous motor system at dual-redundant and fault tolerant modes in aviation application", CHINESE JOURNAL OF AERONAUTICS, ELSEVIER, AMSTERDAM, NL, vol. 30, no. 4, 14 June 2017 (2017-06-14), pages 1548 - 1560, XP085154865, ISSN: 1000-9361, DOI: 10.1016/J.CJA.2017.05.001

## Beschreibung

### Technisches Gebiet

Die Erfindung betrifft elektrische Maschinen mit mehreren gleichartigen Teilmaschinen in redundanter Ausführung, die separat angesteuert werden und galvanisch voneinander getrennt sind. Die Erfindung betrifft weiterhin Verfahren zur Ansteuerung der Teilmaschinen, um homogene, identische Drehmomentenbeiträge zu erhalten.

### Technischer Hintergrund

In sicherheitskritischen Bereichen, wie beispielsweise bei Lenkantrieben im Kraftfahrzeug, werden elektrische Maschinen häufig redundant ausgeführt, indem Teilmaschinen mit galvanisch voneinander getrennten mehrphasigen Statorwicklungen in der elektrischen Maschine vorgesehen sind. Dabei wirken die mehrphasigen Statorwicklungen auf einen mit Permanentmagneten versehenen Rotor. Die Statorwicklungen werden über separate redundant ausgeführte Steuergeräte zur Ansteuerung der Teilmaschinen angesteuert, so dass die Teilmaschinen bei gleicher Ansteuerung einen entsprechend identischen Drehmomentenbeitrag zu einem Gesamtdrehmoment stellen. Jedoch kommt es aufgrund von diversen Einflüssen dazu, dass die Drehmomentenbeiträge der Teilmaschinen unterschiedlich sind. Dies kann zu einem unkomfortablen Lenkverhalten führen.

Die Druckschrift US 2018/105201 A1 offenbart eine Steuervorrichtung für eine rotierende Maschine, umfassend eine Rotationsmaschine mit einer Rotorstruktur mit ersten Dreiphasenwicklungen und zweiten Dreiphasenwicklungen, einen ersten Stromdetektor, um einen durch jede der ersten Dreiphasenwicklungen fließenden ersten Wicklungsstrom zu erfassen, einen zweiten Stromdetektor, um einen zweiten Wicklungsstrom, der durch jede der zweiten Dreiphasenwicklungen fließt, zu erfassen, eine Steuerung, um einen ersten Spannungsbefehl zu berechnen, so dass der von dem ersten Stromdetektor erfasste erste Wicklungsstrom mit einem ersten Strombefehl übereinstimmt, und um einen zweiten Spannungsbefehl zu berechnen, so dass der von dem zweiten Stromdetektor erfasste zweite Wicklungsstrom mit einem zweiten Strombefehl übereinstimmt, einen ersten Leistungswandler, um auf der Grundlage des ersten Spannungsbefehls eine Spannung an jede Phase der ersten dreiphasigen Wicklungen anzulegen, einen zweiten Leistungswandler, um auf der Grundlage des zweiten Spannungsbefehls eine Spannung an jede Phase der zweiten Dreiphasenwicklungen anzulegen, einen Positionsschätzungsbefehlsgenerator, um einen ersten Positionsschätzungsbefehl mit einer ersten Frequenz erzeugt und einen zweiten Positionsschätzungsbefehl mit der ersten Frequenz zu erzeugen, und einen Drehpositionsschätzer, um einen Amplitudenwert einer Komponente der ersten Frequenz auf der Grundlage des ersten Wicklungsstroms und/oder des zweiten Wicklungsstroms extrahiert, um dadurch eine Drehposition der Wechselstrom-Drehmaschine auf der Grundlage einer Größe des Amplitudenwerts zu schätzen, wobei die Steuerung den ersten Positionsschätzungsbefehl dem ersten Spannungsbefehl überlagert und ein Ergebnis der Überlagerung an den ersten Stromrichter ausgibt, und den zweiten Positionsschätzungsbefehl dem zweiten Spannungsbefehl überlagert und ein Ergebnis der Überlagerung an den zweiten Stromrichter ausgibt.

Aus der Druckschrift DE 10 2019 122 434 A1 ist Motorsteuerungssystem bekannt, umfassend eine erste Steuerung, die einen ersten Drehmomentbefehl unter Verwendung eines ersten geschlossenen Regelkreises berechnet, eine zweite Steuerung, die einen zweiten Drehmomentbefehl unter Verwendung eines zweiten geschlossenen Regelkreises berechnet, wobei sowohl die erste Steuerung als auch die zweite Steuerung den jeweiligen ersten Drehmomentbefehl und zweiten Drehmomentbefehl unter Verwendung einer einheitlichen Berechnung berechnen, bei der ein Leckintegrierer verwendet wird und ein Integriererzustand im Zeitbereich berechnet wird, der durch Diskretisierung in einer elektrischen Steuereinheit implementiert ist, und einen Motor, der einen Drehmomentbefehl zum Erzeugen eines entsprechenden Drehmomentbetrags basierend auf dem ersten Drehmomentbefehl und dem zweiten Drehmomentbefehl empfängt.

Die Druckschrift US2019/308664 A1 offenbart ein System mit einer Positionssteuerung, die konfiguriert ist, um einen eingegebenen Regalpositionsbefehl und eine gemessene Regalposition zu empfangen; und einen Geschwindigkeitsbefehl auf der Grundlage einer Differenz zwischen dem eingegebenen Regalpositionsbefehl und der gemessenen Regalposition zu berechnen, mit einem Geschwindigkeitsregler, der konfiguriert ist, um den Geschwindigkeitsbefehl und eine gemessene Motordrehzahl zu empfangen und einen Eingangsdrehmomentbefehl auf der Grundlage einer Differenz zwischen dem Geschwindigkeitsbefehl und der gemessenen Motordrehzahl zu berechnen; wobei das System eine Position einer Zahnstange einstellt, indem es einen Drehmomentbetrag erzeugt, der dem Anlegen des Eingangsdrehmomentbefehls an einen Motor entspricht.

Die Druckschrift CN 108 107 734 offenbart ein elektromechanisches Kopplungsmodellierungsverfahren für ein Vorschubsystem eines Permanentmagnet-Synchron-Linearmotors.

Die Druckschrift ZHOU QIXUN ET AL: "Crossed-feedback control of dual-redundancy permanent magnetic brushless do servo system used in electro-hydrostatic actuator", ELECTRICAL MACHINES AND SYSTEMS, 2008. ICEMS 2008, Seiten 1237-1241 offenbart ein Motorsystem mit zwei voneinander galvanisch getrennten Teilmotoren, die über eine PID-Regelung angesteuert werden.

Die Druckschrift KUANG XIAOLIN ET AL: "Research on a six-phase permanent magnet synchronous motor system at dual-redundant and fault tolerant modes in aviation application", CHINESE JOURNAL OF AERONAUTICS, Bd. 30, Nr. 4, 14. Juni 2017 (2017-06-14), Seiten 1548-1560 offenbart ein Motorsystem mit galvanisch getrennten Ansteuerzweigen.

Es ist daher Aufgabe der vorliegenden Erfindung, ein Motorsystem mit einer elektrischen Maschine mit mehreren Teilmaschinen so anzusteuern, dass diese möglichst gleiche Drehmomentenbeiträge bereitstellen.

### Offenbarung der Erfindung

Diese Aufgabe wird durch das Motorsystem zur Ansteuerung einer elektronisch kommutierten elektrischen Maschine mit mehreren Teilmaschinen gemäß Anspruch 1 sowie ein Verfahren zum Betreiben eines Motorsystems gemäß dem nebengeordneten Anspruch gelöst.

Weitere Ausgestaltungen sind in den abhängigen Ansprüchen angegeben.

Gemäß einem ersten Aspekt ist ein Motorsystem vorgesehen, umfassend:
- eine elektrische Maschine und mehreren Teilmaschinen, die jeweils eine separate Statorwicklung aufweisen, die galvanisch voneinander getrennt sind, und zum Antreiben eines gemeinsamen Rotors mit einem jeweiligen Drehmomenentenbeitrag dienen;
- einen Ansteuerzweig für jede der Statorwicklungen, wobei jeder Ansteuerzweig ausgebildet ist, um die jeweilige Teilmaschine mit Phasenspannungen zu betreiben, um einen gewünschten Drehmomentenbeitrag bereitzustellen, wobei die Ansteuerzweige elektrisch voneinander getrennt sind;
- eine oder mehrere Regelungen in jedem der Ansteuerzweige, die ausgebildet sind, um abhängig von einer vorgegebenen Sollgröße die Phasenspannungen zur Ansteuerung der zugeordneten Statorwicklung anzugeben,
   wobei die eine oder die mehreren Regelungen ohne dynamische Anteile, d.h. ohne Berücksichtigung einer zeitabhängigen Änderung einer Istgröße, ausgebildet sind.

Die mehreren Regelungen sind als kaskadierte Regelungen mit einer Positionsregelung vorgesehen, die insbesondere eine Drehzahlregelung und eine Stromregelung umfassen.

Bei einer redundanten Auslegung eines Motorsystems mit einer aus mehreren Teilmaschinen aufgebauten elektrischen Maschine werden die Teilmaschinen durch separate Steuergeräte redundant angesteuert. In den Steuergeräten ist jeweils eine kaskadierte Regelungsstruktur vorgesehen.

Es ist eine Positionsregelung vorgesehen, die nur mit einem Proportionalanteil ausgebildet ist. Insbesondere kann die Positionsregelung eine Solldrehzahl vorgeben.

Zum Einregeln der Solldrehzahl kann eine Drehzahlregelung vorgesehen sein, wobei die Drehzahlregelung nur mit einem Proportionalanteil, einem Proportional- und einem Integratoranteil (Pl-Regelung), oder einem Proportional-, Differential- und einem Integratoranteil (PID-Regelung) ausgebildet sein kann. Auch andere Architekturen einer Drehzahlregelung können vorgesehen sein. Weiterhin kann die Drehzahlregelung einen Sollmotorstrom vorgeben, der einen Drehmomentenbeitrag der zugeordneten Die von den Steuergeräten durch die jeweilige Drehzahlregelung vorgegebenen Soll-Motorströme entsprechen gewünschten Drehmomentenbeiträgen der Teilmaschinen, die gemeinsam das Gesamtdrehmoment angeben zw. Bereitstellen sollen.

Zum Einregeln des Sollmotorstroms kann eine Stromregelung vorgesehen sein. Die Stromregelung kann nur mit einem Proportionalanteil (P-Regelung), einem Proportional- und einem Integratoranteil (PI-Regelung), oder einem Proportional-, Differential- und einem Integratoranteil (PID-Regelung) ausgebildet sein. Auch andere Architekturen einer Stromregelung können vorgesehen sein. Weiterhin kann die Stromregelung Phasenspannungen vorgeben.

Die Soll-Motorströme werden mithilfe einer Stromregelung und einer Park- und Clark-Transformation in zu stellende Phasenspannungen umgewandelt, die von einem Leistungstreiber an Phasenstränge der jeweiligen Statorwicklung angelegt werden können.

Die redundante Auslegung des Motorsystems mit separaten Steuergeräten und Statorwicklungen ist in der Regel vollständig, d.h. beide Teilmaschinen sind galvanisch voneinander getrennt. Die Steuergeräte arbeiten dadurch asynchron und liefern als Ausgang pulsweitenmodulierte Ansteuersignale für die Ansteuerung des jeweiligen Leistungstreibers. D.h. die Ansteuersignale entsprechen jeweils einem zyklischen gepulsten Signal, dessen Tastverhältnis, die zu stellende Phasenspannung angibt. Auch wenn die Zyklusfrequenzen identisch gewählt sind, kommt es aufgrund von Toleranzen zu Abweichungen der Phasenlagen der Ansteuersignale.

Zudem kommt es auch, insbesondere im dynamischen Betrieb, aufgrund der asynchronen Ansteuerung der Teilmaschinen zu unterschiedlichen Drehmomentbeiträgen. Der asynchrone Betrieb der Steuergeräte führt dazu, dass die zu stellenden Phasenströme zur Ansteuerung einer Phasenwicklung jeder der Teilmaschinen nicht gleichzeitig berechnet werden und dadurch die Sollvorgaben der Regelungen voneinander abweichen. Dies sorgt für unterschiedlich hohe Drehmomentenbeiträge, die von den Teilmaschinen bereitgestellt werden.

Eine etwaige Synchronisierung beider Steuergeräte zum gleichmäßigen Bereitstellen der Teilmotormomente ist jedoch nachteilig, da bei einer redundanten Auslegung des Motorsystems die galvanische Trennung der Teilsysteme aufgehoben wird, da die Synchronisierung mithilfe eines Synchronisationskanals z.B. in Form einer oder mehrerer elektrischer Signalleitungen zwischen den Steuergeräten erfolgen muss.

Das obige Motorsystem mit einer elektrischen Maschine mit mehreren redundant anzusteuernden Teilmaschinen verfolgt einen anderen Ansatz. Die Teilmaschinen werden durch Vorgabe einer Sollposition, einer Soll-Drehzahl oder eines Solldrehmoments, mithilfe einer Positionsregelung, einer Drehzahlregelung bzw. einer Momentenregelung angesteuert.

Die Positionsregelung umfasst ausschließlich einen P-Regler, d.h. eine Regelung ohne dynamische Anteile, der anstelle eines im Stand der Technik üblichen PI- oder PID-Reglers ausreichend genau ist, um die Position der elektrischen Maschine zu regeln. Entsprechend können die Drehzahlregelung und die Momentenregelung als einfache P-Regler ohne dynamischen Anteil ausgebildet sein, wenn lediglich eine Drehzahlregelung der elektrischen Maschine bzw. eine Momentenregelung der elektrischen Maschine vorgesehen sein sollen.

Das Vorsehen der entsprechenden Regelung ohne dynamische Regelungsanteile vermeidet, dass es aufgrund des asynchronen Betriebs der Steuergeräte die zu unterschiedlichen Zeitpunkten erfassten voneinander abweichenden Istwerten der Position des Rotors, der Drehzahl und/oder des Motorstroms (Istgröße) durch einen Integrator (I-Anteil) oder einen Differenziator (D-Anteil) der Regelung zu unterschiedlichen Stellgrößen der Regelung für die einzelnen Teilmaschinen kommt.

So führen unterschiedliche Istpositionen in herkömmlichen auf dynamischen Betrieb ausgelegten Positionsregelungen insbesondere bei einem vorgesehenen Integrator in den Ansteuerungen für die Teilmaschinen zu schnell voneinander abweichenden Solldrehmomenten für die Teilmaschinen, da voneinander abweichende Istpositionen zu unterschiedlichen Integratorwerten führen. Das Vorsehen einer Regelung mit lediglich einem P-Anteil, d.h. ohne dynamischen Anteil, führt also dazu, dass eine durch Phasenverschiebung des PWM-Zyklus und durch asynchronen Betrieb der Steuergeräte für die Teilmaschinen resultierende Abweichung der Stellgrößen für die Teilmaschinen vermieden wird. Das Weglassen des Integrator-Anteils der Positionsregelung vermeidet so unterschiedliche Zustände, die durch Aufintegrierung von Regelabweichungen entstehen können, so dass die Regelung in der Regel gleiche Stellgrößen für die Teilmaschinen ausgeben.

Es kann vorgesehen sein, dass die Phasenspannungen als Tastverhältnis für eine Pulsweitenmodulation angegeben sind und wobei in jedem Ansteuerzweig ein PWM-Block vorgesehen ist, um Ansteuersignale für einen jeweiligen Leistungstreiber zum Bereitstellen der Phasenspannungen mit einer Pulsweitenmodulation abhängig von vorgegebenen Tastverhältnissen und mit einer vorgegebenen Zyklusfrequenz, die eine Periodendauer der Pulsweitenmodulation angibt, zu generieren.

Gemäß einem weiteren Aspekt ist ein Verfahren zum Betreiben einer elektrischen Maschine mit mehreren Teilmaschinen vorgesehen, die jeweils eine separate Statorwicklung aufweisen, die galvanisch von den anderen Statorwicklungen getrennt ist, und zum Antreiben eines gemeinsamen Rotors mit einem jeweiligen Drehmomentenbeitrag dienen, wobei die Teilmaschinen jeweils über einen separaten Ansteuerzweig für jede der Statorwicklungen mit Phasenspannungen angesteuert werden, um einen gewünschten Drehmomentenbeitrag bereitzustellen, wobei die Phasenspannungen abhängig von einer vorgegebenen Sollgröße zur Ansteuerung der zugeordneten Statorwicklung mit einer oder mehreren kaskadierten Regelungen geregelt werden, wobei mindestens eine der einen oder der mehreren Regelungen ausschließlich mit einem Proportionalanteil oder ohne dynamische Anteile ausgebildet ist.

### Kurzbeschreibung der Zeichnungen

Ausführungsformen werden nachfolgend anhand der beigefügten Zeichnungen näher erläutert. Es zeigen:
- Figur 1: eine schematische Darstellung eines Motorsystems mit einer elektrischen Maschine mit zwei Teilmaschinen, die über redundante Ansteuerungen mithilfe von zwei redundanten Steuergeräten angesteuert werden; und
- Figur 2: ein Blockdiagramm zur Darstellung einer beispielhaften Regelung eines der redundanten Ansteuerpfade für eine der Teilmaschinen.

### Beschreibung von Ausführungsformen

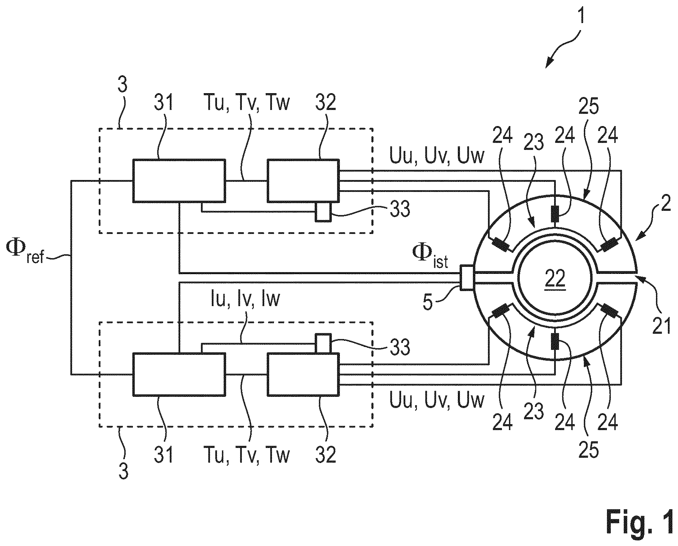

Figur 1 zeigt ein Motorsystem 1 mit einer elektrischen Maschine 2, die als elektronisch kommutierte elektrische Maschine ausgebildet ist. Die elektrische Maschine 2 weist einen Stator 21 und einen Rotor 22 auf. Der Stator 21 weist zwei voneinander separate Statorwicklungen 23 mit jeweils drei Phasensträngen 24 auf, so dass zwei dreiphasige Teilmaschinen 25 ausgebildet sind.

Jede der Statorwicklungen 23 wird über einen separaten Ansteuerzweig 3 angesteuert. Die Ansteuerzweige 3 sind voneinander galvanisch getrennt und stellen für die Teilmaschinen 25 jeweils Phasenspannungen Uu, Uv, Uw zur Verfügung. Durch die Phasenspannungen Uu, Uv, Uw werden die Statorwicklungen 23 bestromt, so dass ein Drehmomentenbeitrag der jeweiligen Teilmaschine 25 bereitgestellt wird.

Die jeder Teilmaschine 25 zugeordneten Ansteuerzweige 3 weisen jeweils ein Steuergerät 31 auf, das Ansteuersignale Tu, Tv, Tw für einen dreiphasigen Leistungstreiber 32 bereitstellen, die die Phasenspannungen Uu, Uv, Uw für die jeweiligen Phasenstränge 24 der betreffenden Statorwicklung 23 vorgeben.

Die durch die jeweiligen Phasenstränge der betreffenden Statorwicklung 23 fließenden Phasenströme lu, Iv, Iw werden mithilfe einer jeweiligen Phasenstrommesseinheit 33 gemessen und eine entsprechende Stromangabe für die Phasenströme lu, Iv, Iw dem Steuergerät 31 bereitgestellt. Weiterhin wird eine Rotorposition des Rotors 22 mithilfe eines Positionssensors 5 gemessen und diese als Istposition Φₘ (Istgröße) ebenfalls den Steuergeräten 31 bereitgestellt.

Die Steuergeräte 31 sind beispielsweise ausgebildet, um in Hardware und/oder Software eine mehrstufige Regelung der Position der elektrischen Maschine 1 vorzusehen. Dazu wird eine Sollposition Φ_{ref} vorgegeben, aus der in Verbindung mit der Istposition Φₘ eine Regelabweichung für eine Positionsregelung bestimmt werden kann.

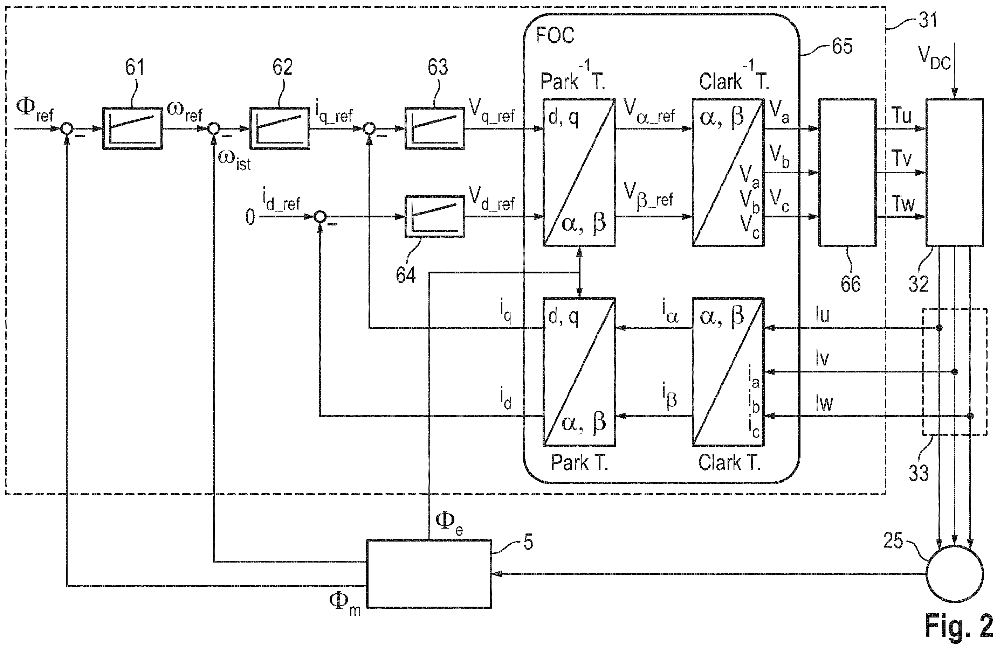

Die mehrstufige Regelung ist als Blockdiagramm in Figur 2 näher in Form einer positionsgeregelten elektrischen Maschine 1 dargestellt.

Die Regelungsabweichung als Differenz aus Sollposition Φ_{ref} und Istposition Φᵢₛₜ wird einem Positionsregler 61 zugeführt, der ausschließlich als P-Regelung, d. h. ausschließlich einen Proportionalanteil aufweist, ausgebildet ist.

Die Stellgröße der Positionsregelung entspricht einer Solldrehzahl ω_{ref}. Aus der gemessenen Istposition Φₘ kann durch Differenzierung eine Istdrehzahl ωᵢₛₜ abgeleitet werden, so dass als Regelabweichung für eine nachgelagerte Drehzahlregelung insbesondere eine Differenz der Solldrehzahl ωᵣₑᵣ und der Istdrehzahl ωᵢₛₜ ausgewertet werden kann.

Die Drehzahlregelung kann mit einem Drehzahlregler 62 vorgenommen werden, der insbesondere als Pl-Regelung oder PID-Regelung ausgebildet sein kann. Die Drehzahlregelung kann also einen Differential- oder Integralanteil umfassen. Die Drehzahlregelung stellt einen Sollmotorstrom Iq_ref zur Verfügung, der in einem rotorfesten Koordinatensystem einen q-Anteil des Motorstroms Iq angibt.

Eine Regelabweichung des q-Anteils Iq des Sollmotorstroms zu einem q-Anteil des Istmotorstroms Iq wird in einem ersten Stromregler 63, der vorzugsweise als P-Regelung, Pl-Regelung oder PID-Regelung ausgebildet sein kann, ausgewertet, um einen q-Anteil einer Sollspannung Uq_ref im rotorfesten Koordinatensystem auszugeben. Analog wird als d-Anteil Id des Sollmotorstroms 0 vorgegeben.

Der d-Anteil des Sollmotorstroms kann auf null gesetzt werden, so dass eine 90°-Voreilung des durch den Motorstrom bewirkten Magnetfelds bezüglich der Richtung eines Erregermagnetfelds des Rotors an der aktuellen Rotorposition erreicht werden kann. Eine Regelabweichung des d-Anteils Id des Sollmotorstroms zu einem d-Anteil des Istmotorstroms Id wird in einem zweiten Stromregler 64, der vorzugsweise als P-Regelung ausgebildet ist, ausgewertet, um einen d-Anteil einer Sollspannung Ud_ref im rotorfesten Koordinatensystem auszugeben.

Mithilfe einer entsprechenden Transformation in einem Transformationsblock 65 können die im rotorfesten Koordinatensystem angegebenen Motorspannungen Uq, Ud abhängig von einer elektrischen Rotorlage Φₑ, die der Istposition Φₘ entsprechen kann oder aus dieser abgeleitet werden kann, mithilfe einer Clarke- und Park-Transformation in die mehrphasigen Phasenspannungen Uu, Uv, Uw umgewandelt werden.

Die Phasenspannungen Uu, Uv, Uw entsprechen den Sollvorgaben für die Phasenspannungen des betreffenden Ansteuerzweiges und werden in entsprechende Ansteuersignale Tu, Tv, Tw in einem PWM-Block 66 umgewandelt, die Tastverhältnissen für die Ansteuerung in dem dreiphasigen Leistungstreiber 32 entsprechen.

Die Regelabweichung des ersten und zweiten Stromreglers 63, 64 der Stromregelung ergibt sich aus einer Rücktransformation mithilfe einer Clarke- und Park-Transformation der gemessenen Phasenströme in das rotorfeste Koordinatensystem, so dass die separaten Stromregelungen für den q-Anteil und d-Anteil der Motorströme separate Regelungen vorgesehen werden können.

In einer bevorzugten Ausführungsform sind die Positionsregelung als P-Regelung, die Drehzahlregelung und die Stromregelungen als Pi- oder PID-Regelungen ausgeführt, um so in beiden Ansteuerzweigen 3 die Abweichungen des Regelungsverhaltens aufgrund des asynchronen Betriebs der Steuergeräte 31 möglichst zu minimieren. Auf diese Weise können selbst bei einem asynchronen Betrieb der beiden Steuergeräte 31 in allen Ansteuerzweigen 3 im Wesentlichen identische Drehmomentenbeiträge realisiert werden.

### Bezugszeichenliste

- 1: Motorsystem
- 2: elektrische Maschine
- 21: Stator
- 22: Rotor
- 23: Statorwicklung
- 24: Phasenstränge
- 25: Teilmaschine
- 3: Ansteuerzweig
- 31: Steuergerät
- 32: dreiphasiger Leistungstreiber
- Uu, Uv, Uw: Phasenspannungen
- Tu, Tv, Tw: Ansteuersignale
- lu, Iv, Iw: Phasenströme
- 5: Positionssensor
- Φ_{ref}: Sollposition
- Φₘ: Istposition
- 61: Positionsregler
- 62: Drehzahlregler
- 63: erster Stromregler
- 64: zweiter Stromregler
- 65: Transformationsblock
- 66: PWM-Block

## Patentansprüche

1. Motorsystem (1), umfassend:
- eine elektrische Maschine (2) mit mehreren Teilmaschinen (25), die jeweils eine separate Statorwicklung (23) aufweisen, die zum Antreiben eines gemeinsamen Rotors (22) mit einem jeweiligen Drehmomenentenbeitrag dienen;
- einen Ansteuerzweig (3) für jede der Statorwicklungen (23), wobei jeder Ansteuerzweig (3) ausgebildet ist, um die jeweilige Teilmaschine (25) mit Phasenspannungen (Uu, Uv, Uw) zu betreiben, um einen gewünschten Drehmomentenbeitrag bereitzustellen;
- eine oder mehrere kaskadierte Regelungen (61, 62, 63, 64) in jedem der Ansteuerzweige (3), die ausgebildet sind, um abhängig von einer vorgegebenen Sollgröße die Phasenspannungen (Uu, Uv, Uw) zur Ansteuerung der zugeordneten Statorwicklung (23) anzugeben, wobei die mehreren separaten Statorwicklungen (23) galvanisch von den übrigen Statorwicklungen (23) getrennt sind, **dadurch gekennzeichnet, dass** die Ansteuerzweige (3) elektrisch
voneinander getrennt sind und eine asynchrone Ansteuerung der Teilmaschinen bereitstellen, und dass mindestens eine der einen oder der mehreren Regelungen (61, 62, 63, 64) ausschließlich mit einem Proportionalanteil oder ohne dynamische Anteile ausgebildet ist,
wobei eine Positionsregelung (61) vorgesehen ist, die nur mit einem Proportionalanteil ausgebildet ist.

2. Motorsystem nach Anspruch 1, wobei die mehreren Regelungen (61, 62, 63, 64) eine Drehzahlregelung und eine Stromregelung umfassen.

3. Motorsystem nach Anspruch 1 oder 2, wobei die Phasenspannungen (Uu, Uv, Uw) als Tastverhältnis für eine Pulsweitenmodulation angegeben sind und wobei in jedem Ansteuerzweig ein PWM-Block (66) vorgesehen ist, um Ansteuersignale (Tu, Tv, Tw) für einen jeweiligen Leistungstreiber (32) zum Bereitstellen der Phasenspannungen (Uu, Uv, Uw) mit einer Pulsweitenmodulation abhängig von vorgegebenen Tastverhältnissen und mit einer vorgegebenen Zyklusfrequenz, die eine Periodendauer der Pulsweitenmodulation angibt, zu generieren.

4. Motorsystem nach einem der Ansprüche 1 bis 3, wobei die Positionsregelung (61) eine Solldrehzahl vorgibt, wobei eine Drehzahlregelung (62) vorgesehen ist, um die Solldrehzahl zu regeln, wobei die Drehzahlregelung mit einem Integralanteil ausgebildet ist.

5. Motorsystem nach Anspruch 4, wobei die Drehzahlregelung (62) einen Sollmotorstrom vorgibt, wobei eine Stromregelung (63, 64) vorgesehen ist, um einen Sollmotorstrom zu regeln, wobei die Stromregelung mit einem Integralanteil ausgebildet ist.

6. Verfahren zum Betreiben einer elektrischen Maschine (2) mit mehreren Teilmaschinen (25), die jeweils eine separate Statorwicklung (23) aufweisen, die galvanisch von den übrigen Statorwicklungen (23) getrennt ist, und einen gemeinsamen Rotor (22) mit einem jeweiligen Drehmomentenbeitrag antreiben, wobei die
Teilmaschinen (25) jeweils über einen separaten Ansteuerzweig (3) für jede der Statorwicklungen (23) mit Phasenspannungen (Uu, Uv, Uw) angesteuert werden, um einen gewünschten Drehmomentenbeitrag bereitzustellen, wobei die Ansteuerzweige (3) elektrisch voneinander getrennt sind und eine asynchrone Ansteuerung der Teilmaschinen bereitstellen, wobei die Phasenspannungen (Uu, Uv, Uw) abhängig von einer vorgegebenen Sollgröße zur Ansteuerung der zugeordneten Statorwicklung (23) mit einer oder mehreren kaskadierten Regelungen (61, 62, 63, 64) geregelt werden, wobei mindestens eine der einen oder der mehreren Regelungen (61, 62, 63, 64) ausschließlich mit einem Proportionalanteil oder ohne dynamische Anteile ausgebildet ist, wobei eine Positionsregelung (61) vorgesehen ist, die nur mit einem Proportionalanteil ausgebildet ist.

## Claims

1. Motor system (1) comprising:
- an electrical machine (2) with a plurality of sub-machines (25), each having a separate stator winding (23), which windings serve to drive a common rotor (22) with a particular torque contribution;
- a control branch (3) for each of the stator windings (23), each control branch (3) being designed to operate the particular sub-machine (25) with phase voltages (Uu, Uv, Uw) in order to provide a desired torque contribution;
- one or more cascaded controls (61, 62, 63, 64) in each of the control branches (3), which are designed to specify the phase voltages (Uu, Uv, Uw) for controlling the associated stator winding (23) depending on a predetermined target value,
the plurality of separate stator windings (23) being galvanically separated from the other stator windings (23), **characterized in that** the control branches (3) are electrically separated from one another and provide asynchronous control of the sub-machines, **and in that** at least one of the one or more controls (61, 62, 63, 64) is designed exclusively with a proportional component or without dynamic components, a position control (61) being provided which is designed only with a proportional component.

2. Motor system according to claim 1, wherein the plurality of controls (61, 62, 63, 64) comprise a speed control and a current control.

3. Motor system according to claim 1 or 2, wherein the phase voltages (Uu, Uv, Uw) are specified as a duty cycle for a pulse width modulation and wherein a PWM block (66) is provided in each control branch in order to generate control signals (Tu, Tv, Tw) for a particular power driver (32) for providing the phase voltages (Uu, Uv, Uw) with a pulse width modulation depending on predetermined duty cycles and with a predetermined cycle frequency which specifies a period duration of the pulse width modulation.

4. Motor system according to any of claims 1 to 3, wherein the position control (61) specifies a target speed, wherein a speed control (62) is provided in order to regulate the target speed, wherein the speed control is designed with an integral component.

5. Motor system according to claim 4, wherein the speed control (62) specifies a target motor current, wherein a current control (63, 64) is provided to regulate a target motor current, wherein the current control is designed with an integral component.

6. Method for operating an electrical machine (2) having a plurality of sub-machines (25), each of which has a separate stator winding (23) which is galvanically separated from the other stator windings (23), and drives a common rotor (22) with a particular torque contribution, wherein the sub-machines (25) are each controlled via a separate control branch (3) for each of the stator windings (23) with phase voltages (Uu, Uv, Uw) in order to provide a desired torque contribution, wherein the control branches (3) are electrically separated from one another and provide asynchronous control of the sub-machines, wherein the phase voltages (Uu, Uv, Uw) are regulated depending on a predetermined target value for controlling the associated stator winding (23) with one or more cascaded controls (61, 62, 63, 64), wherein at least one of the one or more controls (61, 62, 63, 64) is designed exclusively with a proportional component or without dynamic components, wherein a position control (61) is provided which is designed only with a proportional component.

## Revendications

1. Système de moteur (1), comprenant :
- une machine électrique (2) comportant plusieurs machines partielles (25), qui présentent respectivement un enroulement de stator (23) distinct, qui servent à entraîner un rotor (22) commun avec une contribution de couple respective ;
- une branche de commande (3) pour chacun des enroulements de stator (23), dans lequel chaque branche de commande (3) est réalisée pour faire fonctionner la machine partielle (25) respective avec des tensions de phase (Uu, Uv, Uw) afin de fournir une contribution de couple souhaitée ;
- une ou plusieurs régulations en cascade (61, 62, 63, 64) dans chacune des branches de commande (3), qui sont réalisées pour indiquer, en fonction d'une grandeur de consigne prédéfinie, les tensions de phase (Uu, Uv, Uw) pour la commande de l'enroulement de stator (23) associé, dans lequel
les plusieurs enroulements de stator (23) distincts sont séparés galvaniquement des autres enroulements de stator (23), **caractérisé en ce que** les branches de commande (3) sont séparées électriquement les unes des autres et fournissent une commande asynchrone des machines partielles, et **en ce qu'**au moins l'une des une ou plusieurs régulations (61, 62, 63, 64) est réalisée exclusivement avec une partie proportionnelle ou sans parties dynamiques, dans lequel une régulation de position (61) est prévue, qui est réalisée uniquement avec une partie proportionnelle.

2. Système de moteur selon la revendication 1, dans lequel les plusieurs régulations (61, 62, 63, 64) comprennent une régulation de vitesse de rotation et une régulation de courant.

3. Système de moteur selon la revendication 1 ou 2, dans lequel les tensions de phase (Uu, Uv, Uw) sont indiquées comme rapport cyclique pour une modulation de largeur d'impulsion et dans lequel un bloc PWM (66) est prévu dans chaque branche de commande pour générer des signaux de commande (Tu, Tv, Tw) pour un pilote de puissance (32) respectif pour fournir les tensions de phase (Uu, Uv, Uw) avec une modulation de largeur d'impulsion en fonction de rapports cycliques prédéfinis et avec une fréquence de cycle prédéfinie qui indique une durée de période de la modulation de largeur d'impulsion.

4. Système moteur selon l'une des revendications 1 à 3, dans lequel la régulation de position (61) prédéfinit une vitesse de rotation de consigne, dans lequel une régulation de vitesse de rotation (62) est prévue pour réguler la vitesse de rotation de consigne, dans lequel la régulation de vitesse de rotation est réalisée avec une partie intégrale.

5. Système de moteur selon la revendication 4, dans lequel la régulation de vitesse de rotation (62) prédéfinit un courant de moteur de consigne, dans lequel une régulation de courant (63, 64) est prévue pour réguler un courant de moteur de consigne, dans lequel la régulation de courant est réalisée avec une partie intégrale.

6. Procédé permettant de faire fonctionner une machine électrique (2) comportant plusieurs machines partielles (25), qui présentent respectivement un enroulement de stator (23) distinct, qui est séparé galvaniquement des autres enroulements de stator (23), et qui entraînent un rotor (22) commun avec une contribution de couple respective, dans lequel les machines partielles (25) sont commandées respectivement par l'intermédiaire d'une branche de commande (3) distincte pour chacun des enroulements de stator (23) avec des tensions de phase (Uu, Uv, Uw), afin de fournir une contribution de couple souhaitée, dans lequel les branches de commande (3) sont séparées électriquement les unes des autres et fournissent une commande asynchrone des machines partielles, dans lequel les tensions de phase (Uu, Uv, Uw) sont régulées en fonction d'une grandeur de consigne prédéfinie pour la commande de l'enroulement de stator (23) associé avec une ou plusieurs régulations en cascade (61, 62, 63, 64), dans lequel au moins l'une des une ou plusieurs régulations (61, 62, 63, 64) est réalisée exclusivement avec une partie proportionnelle ou sans parties dynamiques, dans lequel une régulation de position (61) est prévue, qui est réalisée uniquement avec une partie proportionnelle.
